Europäisches Patentamt

European Patent Office

Office européen des brevets

(19)

(11) Publication number: **0 233 663**

**A1**

## (12) EUROPEAN PATENT APPLICATION

(21) Application number: **87200116.9**

(22) Date of filing: **26.01.87**

(51) Int. Cl.4: **A01G 1/04** , **A01G 31/02**

(30) Priority: **19.02.86 NL 8600413**

(43) Date of publication of application:
**26.08.87 Bulletin 87/35**

(84) Designated Contracting States:
**AT BE CH DE FR GB IT LI LU NL**

(71) Applicant: **Schippers, Hendriekus**
**Edelstenenbaan 15**
**NL-3402 XA IJsselstein(NL)**

(72) Inventor: **Schippers, Hendriekus**
**Edelstenenbaan 15**
**NL-3402 XA IJsselstein(NL)**

(74) Representative: **de Vries, Johannes Hendrik**
**Fokke et al**
**Octrooibureau Los en Stigter B.V. P.O. Box**
**20052**
**NL-1000 HB Amsterdam(NL)**

(54) **Apparatus for growing vegetations.**

(57) The invention provides an apparatus for growing vegetations, such as mushrooms or the like, comprising a number of vegetation boxes (1) that are positioned between two distanced endless transporting means (2), such as chains or the like, that both describe a roundgoing track positioned in a vertical plane. The transporting means (2) are provided with jibs (3) extending outwardly in the plane of their roundgoing track and carrying the vegetation boxes - (1). Due to this arrangement the bulk factor of the apparatus can be raised substantially.

EP 0 233 663 A1

## Apparatus for growing vegetations

The invention relates to an apparatus for growing vegetations, such as mushrooms or the like, comprising a number of vegetation boxes that are positioned between two distanced endless transporting means, such as chains or the like, that both describe a roundgoing track positioned in a vertical plane.

In a known apparatus of this type the vegetation boxes are suspended from the links of the chains. In this known apparatus the track followed by the vegetation boxes therefore coincides with the track followed by the chains. Moreover, the tracks of the suspension points of the vegetation boxes totally correspond with the track of these chains.

An disadvantage of this known apparatus is, that the pitch of the boxes, corresponding with the distance between the suspension points of the vegetation boxes has, to be greater than the width of the boxes. For, the boxes when being in a horizontal section of the roundgoing track would interfere if the pitch would be smaller than the width of the boxes. From practice it is known that the pitch with the presently applied method is about 60 cm. During following the vertical sections of the roundgoing track this means, that the boxes are spaced further here than strictly necessary. Maintaining the pitch of 60 cm requires the use of a vegetation box having a smaller width of the vegetation bed. Ajustified economical and cultivation-technical use of a vegetation bed with such a small width cannot or can hardly be realised.

It is an object of the invention to provide an apparatus for growing vegetation, wherein the afore mentioned disadvantage is eliminated in a simple but nevertheless effective way.

Therefore the apparatus for growing vegetations according to the invention is characterized in that the transporting means are provided with jibs extending outwardly in the plane of their roundgoing track, each of said jibs at their ends comprising means for carrying the vegetation boxes.

In such a way it is guaranteed, that the distance between the boxes in the horizontal sections of the roundgoing track is greater than the pitch.

For the transporting means at the upper and lower sides of the followed track generally extend around a wheel the jibs of two succeeding vegetation boxes in the neighbourhood of said wheel will extend in different radial directions from said wheel, so that the distance between the suspension means for the vegetation boxes at the ends of the jibs will be greater than the distance between the points in which the jibs are connected to the transporting means. Therefore it is possible to choose a pitch being smaller than the width of the boxes. As a direct consequence the bulk factor of this apparatus, that depends on the number of boxes per unity of length of the transporting means, can be raised substantially. As a result the efficiency of the total apparatus is influenced extremely beneficially.

According to a preferred embodiment of the apparatus according to the present invention the roundgoing track of each transporting means is defined by four guiding wheels, said wheels being positioned in pairs with the wheels of one pair having the same vertical elevation.

In this way the transporting means are not led around one single wheel, as mentioned before, but around two guiding wheels positioned adjacent each other. With respect to this it is of course essentially, that the distance between the centres of two corresponding guiding wheels is smaller than the pitch, because otherwise the effect of the jibs would be eliminated. The guiding wheels positioned adjacent like this therefore should both have a diameter, which is smaller than the radius of one single applied guiding wheel having a corresponding horizontal distance between the vertical sections of the roundgoing track. The angular difference between two succeeding jibs positioned in the neigbourhood of those two guiding wheels will hereby be greater than in the case wherein only one guiding wheel is applied. As a result the profitable effect of the jibs is even enlarged. This means that the distance between the boxes will even be extended. Because of this reduction of the pitch the bulk factor of the apparatus can be raised.

Moreover; this embodiment has the advantage, that the so-called load profile of the vegetation bed, as seen perpendicularly to the plane of the roundgoing tracks, can almost adapt a rectangular shape, this being impossible if only one guiding wheel is used. The importance of such a rectangular profile for example can be appreciated at the 'green compost method' often used in growing mushrooms, where composting the vegetation boxes is a requirement. This requirement leads to filling the vegetation boxes with a relative loose material having a low specific weight, so that a good air permeability is obtained. After sweating out and pasteurizing this compost layer is compressed to about 40 or 50 % of its original thickness, wherein the surface of the compost has about the same elevation as the upper edge of the vegetation box. As a result of the afore mentioned rectangular load profile a desired equal compost density is obtained in the entire vegetation box.

In a preferred embodiment of the apparatus according to the invention the vegetation boxes are downwardly tapered.

The advantage of this embodiment is that the natural slope of the compost extending above the edge of the vegetation box after compressing will be compensated by the inclination of the walls of the vegetation boxes, this also resulting in an equal density in the entire vegetation box. Moreover, a still bigger load profile can be obtained without two succeeding vegetation boxes contacting each other.

To improve the handling properties if several processing devices are applied it is preferred when the walls of the vegetation boxes have an outwardly convex surface.

When the vegetation boxes are disengageably connected to the jibs it is possible, for example using a fork-lift truck, to take these vegetation boxes away from the apparatus for processing the vegetations. This processing then can be exercised outside of the room in which the apparatus is positioned.

In a handy embodiment of the apparatus according to the invention each jib comprises at its end a shaft extending perpendicularly to the plane of the roundgoing track, said shaft bearing a carrying means, wherein each vegetation box at its sides directed towards the transporting means comprises a recess for housing such a carrying means.

In this way this engaging the vegetation boxes from the jibs can be carried out in an extremely simple way, without using specialized tools and without carrying out time consuming actions.

If, moreover, each recess is upwardly tapered the vegetation boxes, being reinstalled at the jibs, will always be centred in a correct position.

For processing the vegetation boxes or if these vegetation boxes have to be loosened from the jibs it is extremely beneficial if the apparatus is movable. In this way the apparatus can be moved in such a way that sufficient space is created at the side where the processing has to be carried out, so that this processing can easily be carried out. In general this means also, that the number of apparatus applyable on a certain surface, such as a grow hall, can be increased substantially, for these apparatus can be stacked more closely.

For treating the vegetations in the vegetation boxes, for example mushrooms, it is favourable if the apparatus comprises air conditioners positioned beside the track of the vegetation boxes. For example it is possible, that the apparatus comprises a suction device voor $CO_2$ gas, or an air supply device.

In an advantageous embodiment according to the invention the air conditioners comprise an upper cap, that can be placed around the upper side of the vegetation boxes. To see for it, that the vegetation boxes can be positioned below this upper cap in a simple way the upper cap is provided with removable sides for enabling the passage of the vegetation boxes.

Moreover, it is possible, that the air conditioners also comprise a lower cap, that can be positioned against the lower side of the vegetation boxes.

To obtain a good connection between the lower cap and the lower side of the vegetation boxes the lower cap according to a preferred embodiment of the apparatus according to the invention comprises an upwardly and downwardly movable edge portion that in its one position is free from the lower side of a vegetation box positioned thereabove and that in its other position contacts this lower side.

In a further preferred embodiment of the apparatus according to the invention the upwardly and downwardly movable edge portion comprises a roundgoing U-profile, of which both legs are directed inwardly and are positioned at both sides of an outwardly directed flange of the lower cap, wherein between the upper leg and this flange as well as between the lower leg and this flange inflatable tubes are positioned, said tubes being alternatively inflatable for moving the edge portion upwardly and downwardly relative to the lower cap.

When the lower tube is inflated the U-profile is positioned in its lower position relative to the flange. The edge portion of the lower cap is now free from the lower side of the vegetation box positioned thereabove. If the lower tube is deflated now whereas the upper tube is inflated the edge portion will move upwardly until it contacts the lower side of the vegetation box positioned thereabove. After this the lower cap can be used for carrying out the process accomplished by this lower cap.

To prevent the vegetation box from being raised when the U-profile is raised by the lower tube, preferably means are provided for exerting a downwardly directed force onto the vegetation box, when the lower cap is being positioned. These means are positioned in such a way, that the vegetation boxes during their normal movement can pass then whereas said means effectively stop the vegetation boxes when the lower tube is inflated.

Finally the apparatus can comprise measuring and control devices for measuring the climatological circumstances and for in dependency therewith controlling the air conditioners.

In this way the climatological circumstances in the apparatus can be controlled in an extremely effective way, thereby offering optimum circumstances for growing vegetations.

Hereafter the invention will be elucidated by the means of the drawing, in which a preferred embodiment is shown of the apparatus according to the invention.

Fig. 1 shows a schematical elevational side view of an embodiment of the apparatus according to the invention;

fig. 2 shows a schematical view of a part of the suspension of a vegetation box to a jib according to the invention, at an enlarged scale;

fig. 3 shows a schematical elevational side view of a vegetation box according to the invention, said box being positioned between two air conditioners, and

fig. 4 shows the vegetation box according to fig. 3 when the air conditioners have released the vegetation box to let it pass.

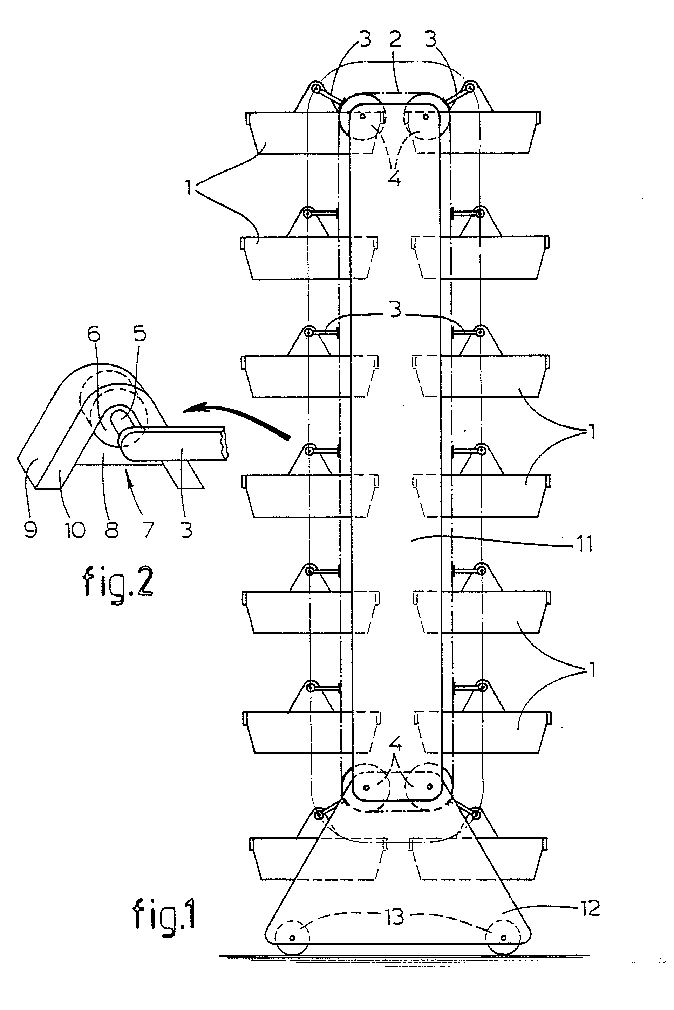

The apparatus for growing vegetations shown in fig. 1 comprises a number of vegetation boxes 1, that are positioned between two distanced endless transporting means 2. In fig. 1 only one of these two transporting means 2 is visible. These transporting means 2, that generally comprise chains or the like, are each positioned in a vertical plane and describe a roundgoing track.

The vegetation boxes for example are fit for growing mushrooms according to the green compost method. In this method the so-called green compost extends upwardly of the upper edge of the vegetation boxes 1.

The transporting means 2 are provided with jibs 3 extending outwardly in the plane of their roundgoing track, said jibs at their ends carrying the vegetation boxes 1. Each jib 3 is with its opposite side connected to the transporting means 2 for example, if chains are used with the links thereof.

In the embodiment of the apparatus according to the invention shown in fig. 1 the roundgoing track of each transporting means 2 is defined by four guiding wheels, 4, that are positioned in pairs with the wheels of each pair having the same vertical elevation. In the shown position of the apparatus the jibs 3 of two succeeding vegetation boxes 1 are positioned at the same vertical elevation in the neighbourhood of two guiding wheels 4. As a result the jibs 3 extend in opposite directions from these guiding wheels 4, so that the distance between the vegetation boxes 1 is greater there than the distance between the connecting points of the jibs 3 to the transporting means 2. Therefore the vegetation boxes 1 will not contact each other with their sides in the neighbourhood of these guiding wheels 4.

The vegetation boxes 1 are disengageably connected to the jibs 3. For this reason each jib 3 comprises at its end a shaft 5 (see fig. 2) extending perpendicularly to the plane of the roundgoing track, said shaft 5 bearing a carrying means 6. Each vegetation box 1 has at its sides directed towards the transporting means 2 a recess 7 for housing the carrying means 6. As clearly appears from fig. 2 each recess 7 is upwardly tapered. Each recess 7 can be formed by an extension of the side wall 8 of a vegetation box 1, wherein this extension has an upper side with outwardly flanged edge portions 9, 10. These edge portions 9, 10 guarantee a correct centration of the carrying means 6 in the recess 7, so that each vegetation box will always be correctly suspended from the jibs 3.

The guiding wheels 4 of the apparatus illustrated in fig. 1 are mounted to a frame 11, that at its lower edge is connected to a lower frame 12. In the lower frame 12 wheels 13 are provided, so that the apparatus can be moved bodily. In a way not illustrated further the wheels 13 can be substituted by cater pillars, wherein driving these cater pillars or the wheels 13 can be established by an additional driving means, such as an electro motor or the like.

In a way not illustrated further it is also possible, however, that the lower frame rests with its lower edges on à series of rollers, that each are rotatable around the link pins of a chain connected on a lower plate. In a way this apparatus is movable over a great number of supporting points established by the link pins and the rollers provided thereon, resulting in an extremely low floor load. Moreover, the installation height is very low.

For driving the transporting means 2 it is of extreme importance, that the corresponding two transporting means 2 of one apparatus are synchronised correctly. The application of one continuous shaft for coupling the guiding wheels 4 of the transporting means 2 at both sides of the vegetation boxes 1 is not possible, for this shaft would interfere with the vegetation boxes 1. Moreover, the realisation thereof becomes more and more unwanted and expensive in a technical view when the number of vegetation boxes 1 increases. Therefore these transporting means 2 can be coupled mutually by a high r.p.m. driving shaft. The advantage of a high r.p.m. driving shaft is, that the influence of angular distortion of this shaft on the synchronisation of both transporting means 2 will be minimized.

The drive mechanism of said shaft can be taken away. Therefore the applied motor reduction shaft comprises a rectangular hollow shaft and a motor reduction flange with slotted holes, in which in the centre an enlarged hole is provided for letting through the head of a bolt. To prevent an unwanted rotation of the apparatus on said shaft, in combination with the apparatus, a vernier-disk is provided. This vernier-disk guarantees a rotation system, that can be locked in almost every position.

As appears further from fig. 1 the vegetation boxes 1 follow at the upper side of the apparatus and at the lower side of the apparatus a substantially horizontal track section. This offers the possibility of providing the apparatus with air conditioners positioned besides the track followed by the vegetation boxes 1. For example a suction device for $CO_2$ gas, said gas mainly accumulating at the upper side of the apparatus and in the upper layer of the compost in the vegetation boxes, and being very hard to remove, or an air supply device, that preferably can be provided at the lower side of the apparatus.

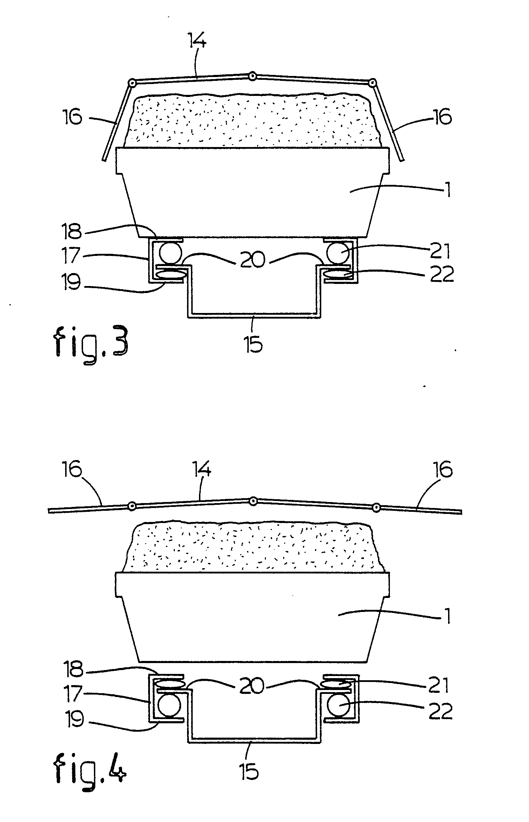

In fig. 3 and 4 an air conditioner is shown comprising an upper cap 14, that can be positioned around the upper side of the vegetation boxes 1, as well as a lower cap 15, that can be brought into contact with the lower side of the vegetation boxes 1. By applying the upper cap 14 as well as the lower cap 15 a climatological space is created, that is entirely isolated from the surroundings.

For the vegetation boxes 1, as shown, are filled with growing material extending above the upper edge, such as green compost or the like, it is necessary, that the upper cap 14 comprises means to let pass the vegetation boxes 1. Therefore the upper cap 14 comprises removable sides 16. In fig. 3 these sides 16 are positioned at both sides of the upper edge of the vegetation box 1, thereby offering an effective screen for the vegetation box 1 as well as for the grow material in said box. In fig. 4 a position is shown in which the sides 16 of the upper cap 14 are pivoted upwardly, so that the vegetation box 1 can be removed sidewardly from under the upper cap 14. The movement of the sides 16 of the upper cap 14 can be carried out in different, not further illustrated, ways.

The lower cap 15 shown in fig. 3 and 4 carries an upwardly and downwardly movable edge portion 17, that in its first position, shown in fig. 3, contacts the lower side of the vegetation box 1, and that in its other position, shown in fig. 4, is free from the lower side of the vegetation box 1 positioned thereabove.

The upwardly and downwardly movable edge portion 17 comprises a roundgoing U-profile, of which both legs 18, 19 are directed inwardly. These legs 18, 19 are positioned at both sides of an outwardly directed flange 20 of the lower cap 15, wherein between the upper leg 18 and this flange 20 as well as between the lower leg 19 and this flange 20 inflatable tubes 21 and 22, respectively, are provided.

If the upper tube 21 is inflated, as shown in fig. 3, whereas the lower tube 22 is deflated, the edge portion 17 is raised against the lower side of the vegetation box 1, so that the lower cap 15 substantially sealingly engages said lower side of the vegetation box 1. In this way air supplied to the lower cap 15 can pass the lower side of the vegetation box 1, that can be perforated to reach the grow material.

In the position illustrated in fig. 4 the upper tube 21 is deflated, whereas the lower tube 22 has been inflated. As a result the edge portion 17 has been lowered, so that the lower side of the vegetation box 1 is free of the lower cap 15. For, as illustrated before, the lower cap 14 has also released the upper side of the vegetation box 1 by pivoting upwardly the sides 16, said vegetation box 1 can be removed sidewardly whereafter a next vegetation box 1 can take in this position whereafter the upper cap 14 as well as the lower cap 15 can be brought to their working position shown in fig. 3.

Finally it is possible that the apparatus is provided with measuring and control devices not illustrated in the figures, so that it is possible to measure the climatological circumstances. In this way an optimalisation of the climatological circumstances can be obtained because these measuring and control device control the air conditioners.

The invention is not restricted to the embodiment described above, but can be varied widely within the scope of the invention.

## Claims

1. Apparatus for growing vegetations, such as mushrooms or the like, comprising a number of vegetation boxes that are positioned between two distanced endless transporting means, such as chains or the like, that both describe a roundgoing track positioned in a vertical plane, **characterized** in that the transporting means are provided with jibs extending outwardly in the plane of their roundgoing track, each of said jibs at their ends comprising means for carrying the vegetation boxes.

2. Apparatus according to claim 1, **characterized** in that the roundgoing track of each transporting means is defined by four guiding wheels, said wheels being positioned in pairs with the wheels of one pair having the same vertical elevation.

3. Apparatus according to claim 1 or 2, **characterized** in that the vegetation boxes are downwardly tapered.

4. Apparatus according to claim 3, **characterized** in that the walls of the vegetation boxes are at least partially inclined at 45°.

5. Apparatus according to one of the claims 1 to 4, **characterized** in that the walls of the vegetation boxes have an outwardly convex surface.

6. Apparatus according to one of the claims 1 to 5, **characterized** in that the vegetation boxes are disengageably affixed to the jibs.

7. Apparatus according to claim 6, **characterized** in that each jib comprises at its end a shaft extending perpendicularly to the plane of the roundgoing track, said shaft bearing a carrying means, wherein each vegetation box at its sides directed towards the transporting means comprises a recess for housing such a carrying means.

8. Apparatus according to claim 7, **characterized** in that each recess is upwardly tapered.

9. Apparatus according to one of the claims 1 to 8, **characterized** in that it is movable.

10. Apparatus according to claim 9, **characterized** in that it comprises a driveable cater pillar.

11. Apparatus according to claim 9, **characterized** in that said apparatus rests on a series of rollers, each roller being rotatable around the link pins of a chain.

12. Apparatus according to one of the claims 2 to 11, **characterized** in that the corresponding transporting means are mutually coupled by a high r.p.m driving shaft.

13. Apparatus according to claim 12, **characterized** in that the driving source of the driving shaft can be taken away.

14. Apparatus according to claim 13, **characterized** in that each transporting means comprises a vernier-holed disk, wherein the apparatus carries a corresponding fixed holed disk, which two disks can be coupled by a removable pin for locking said transporting means against rotation.

15. Apparatus according to one of the claims 1 to 14, **characterized** in that it comprises air conditioners positioned beside the track of the vegetation boxes.

16. Apparatus according to claim 15, **characterized** in that it comprises a suction device for $CO_2$ gas.

17. Apparatus according to claim 15 or 16, **characterized** in that it comprises an air supply device.

18. Apparatus according to one of the claims 15 to 17, **characterized** in that the air conditioners comprise an upper cap, that can be placed around the upper side of the vegetation boxes.

19. Apparatus according to claim 18, **characterized** in that the upper cap has removable sides for enabling the passage of the vegetation boxes.

20. Apparatus according to claim 18 or 19, **characterized** in that the air conditioners also comprise a lower cap, that can be positioned against the lower side of the vegetation boxes.

21. Apparatus according to claim 20, **characterized** in that the lower cap carries an upwardly and downwardly movable edge portion that in its one position is free from the lower side of a vegetation box positioned thereabove and that in its other position contacts this lower side.

22. Apparatus according to claim 21, **characterized** in that the upwardly and downwardly movable edge portion comprises a roundgoing U-profile, of which both legs are directed inwardly and are positioned at both sides of an outwardly directed flange of the lower cap, wherein between the upper leg and this flange as well as between the lower leg and this flange inflatable tubes are positioned, said tubes being alternatively inflatable for moving the edge portion upwardly and downwardly relative to the lower cap.

23. Apparatus according to one of the claims 20 to 22, **characterized** in that said apparatus comprises means for exerting a downwardly directed force onto the vegetation box, when the lower cap is being positioned.

24. Apparatus according to one of the claims 1 to 23, **characterized** in that it comprises measuring and control devices for measuring the climatological circumstances and for in dependency therewith controlling the air conditioners.

fig.2

fig.1

fig.3

fig.4

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | US-A-4 317 308 (B.I.C. DERRICK) * figure 1, position 37 * | 1 | A 01 G 1/04 A 01 G 31/02 |
| A | CH-A- 205 449 (R. RABE) * figure 5 * | 1 | |

| | | | TECHNICAL FIELDS SEARCHED (Int. Cl.4) |
|---|---|---|---|
| | | | A 01 G 1/00 A 01 G 9/00 A 01 G 31/00 |

The present search report has been drawn up for all claims

| Place of search | Date of completion of the search | Examiner |
|---|---|---|
| BERLIN | 13-05-1987 | WUNDERLICH J E |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82